# FASCICULE DE BREVET EUROPEEN

(11) **EP 1 893 655 B1**
(45) Date de publication et mention de la délivrance du brevet: **11.09.2013**
(21) Numéro de dépôt: 06764804.8
(22) Date de dépôt: 21.06.2006
(51) Int. Cl.: C08F 4/645, C08F 10/14

(54) **NOUVELLE COMBINAISON CATALYTIQUE SANS ALUMINIUM POUR LA POLYMERISATION DES ALPHA-OLEFINES ET PROCEDE DE POLYMERISATION METTANT EN UVRE LADITE COMBINAISON**
NEUE KATALYTISCHE ZUSAMMENSETZUNG OHNE ALUMINIUM ZUR POLYMERISATION VON ALPHA-OLEFINEN UND VERFAHREN ZUR POLYMERISATION MIT DIESER ZUSAMMENSETZUNG
NOVEL CATALYTIC ALUMINUM-FREE COMBINATION FOR POLYMERIZING ALPHA-OLEFINS AND POLYMERIZATION METHOD USING SAME

(30) Priorité: 21.06.2005 FR 0506282
(43) Date de publication de la demande: 05.03.2008
(73) Titulaire: UNIVERSITE DES SCIENCES ET TECHNOLOGIES DE LILLE, F-59655 Villeneuve d'Ascq Cedex (FR)
(72) Inventeur: MORTREUX, André, F-59510 Hem (FR); GAUVIN, Régis, F-59000 Lille (FR); GAUTIER, Estelle, F-33310 Lormont (FR)
(74) Mandataire: Balesta, Pierre
(86) Numéro de dépôt international: PCT/FR2006/001409
(87) Numéro de publication internationale: WO 2006/136707

(56) Documents cités:
- SCOLLARD J D ET AL: "CHELATING DIAMIDE COMPLEXES OF TITANIUM: NEW CATALYST PRECURSORS FOR THE HIGHLY ACTIVE AND LIVING POLYMERIZATION OF ALPHA-OLEFINS" JOURNAL OF MOLECULAR CATALYSIS. A, CHEMICAL, ELSEVIER, AMSTERDAM, NL, vol. 128, février 1998 (1998-02), pages 201-214, XP000827526 ISSN: 1381-1169
- TSUBAKI S ET AL: "SYNTHESIS OF ISOTACTIC POLY(PROPYLENE) BY TITANIUM BASED CATALYSTS CONTAINING DIAMIDE LIGANDS" MACROMOLECULAR CHEMISTRY AND PHYSICS, WILEY-VCH VERLAG, WEINHEIM, DE, vol. 202, no. 4, 28 février 2001 (2001-02-28), pages 482-487, XP001025436 ISSN: 1022-1352
- CLARK H C S ET AL: "Titanium(IV) complexes incorporating the aminodiamide ligand [(SiMe3) N{CH2CH2N(SiMe3)}2]<2->(L); the X-ray crystal structures of [TiMe2(L)] and [TiCl{CH(SiMe3)2}(L)]", JOURNAL OF ORGANOMETALLIC CHEMISTRY, ELSEVIER-SEQUOIA S.A. LAUSANNE, CH, vol. 501, no. 1, 4 October 1995 (1995-10-04), pages 333-340, XP004023769, ISSN: 0022-328X, DOI: 10.1016/0022-328X(95)05708-W

## Description

La présente invention concerne de manière générale la polymérisation des alpha-oléfines. Plus particulièrement l'invention se rapporte à une nouvelle combinaison catalytique pour la polymérisation des alpha-oléfines à base d'un complexe de bis-amidure de titane. L'invention concerne également un procédé de polymérisation des alpha-oléfines mettant en oeuvre ladite combinaison catalytique, en l'absence de tout composé comportant de l'aluminium.

La polymérisation des alpha-oléfines permet d'obtenir des hydrocarbures largement utilisés comme base pour les lubrifiants pour moteurs haut de gamme, en raison de leurs performances améliorées par rapport aux huiles minérales et de semi synthèse : indice de viscosité plus élevé, meilleure tenue thermique, meilleure résistance à l'oxydation.

De nombreux procédés de synthèse des polyoléfines ont été décrits dans la littérature, qui font usage d'une gamme diversifiée de catalyseurs, parmi lesquels des catalyseurs à base de titane, vanadium, zirconium associés à des composants organo-aluminiques.

Le document EP 0 569 388 décrit une formulation de catalyseurs destinée à être utilisée dans un procédé de production de polyalpha-oléfines de haut poids moléculaire. Ladite formulation de catalyseurs comprend un composé dérivé d'un métal de transition (Zr, Hf, Ti) et un aluminoxane. Le procédé de production d'une polyalpha-oléfine décrit dans ce document consiste à mettre en contact un ou plusieurs monomères alpha-oléfiniques avec une association catalytiquement active comprenant ledit composé ou ladite formulation de catalyseur, et à recueillir la poly alpha-oléfine ainsi formée.

Dans le cas particulier des systèmes catalytiques à base de diméthyle bisamidure de titane, des résultats intéressants, rapportés dans la publication de Scollard J.D. et al. parue dans Macromolécules 1996, 22, 5241-5243, ont été obtenus lorsque la polymérisation de l'hexène-1 a été réalisée en présence d'un large excès d'aluminoxane (essai n° 1 et 2 dans le tableau 1 de ladite publication).

L'utilisation des activateurs aluminiques en quantité importante lors de la synthèse des polyalpha-oléfines présente cependant de nombreux inconvénients conduisant notamment à la pollution du réacteur de polymérisation, et impose des contraintes, telles que l'élimination ultérieure des résidus aluminiques obtenus après hydrolyse.

Par ailleurs, l'association du complexe diméthyle bisamidure de titane avec un activateur de type acide Lewis tel que le tris-pentafluorophénylborane (B(C₆F₅)₃), en présence d'une quantité importante (500 équivalents) de méthylaluminoxane (MAO), décrite dans le document Scollard *et al.,* donne des résultats insatisfaisants en terme de poids moléculaire et d'activité (essais n° 5 et 6 du tableau 1 de ladite publication).

Des résultats complémentaires, publiés par les mêmes auteurs dans J. Am. Chem. Soc. 1996, 118, 10008-10009, décrivent la polymérisation à température ambiante des alpha-oléfines en présence d'un complexe de diméthyle bisamidure de titane et de tris-pentafluorophénylborane comme activateur. Les données figurant dans le tableau 1 de ce document montrent toutefois que le poids moléculaire et l'activité en production des poly alpha-oléfines ainsi obtenus restent limités.

Cependant, l'utilisation du complexe diméthyle bisamidure implique la synthèse préalable de ce composé au demeurant très sensible. En outre, l'emploi de MAO en large excès rend le système catalytique plus onéreux et implique l'élimination ultérieure des résidus aluminiques obtenus après hydrolyse.

D'après MACROMOLECULAR CHEMISTRY AND PHYSICS 2001, 202, 482-487, la polymérisation de propylène en présence du complexe de bisamidure de titane dichloré, d'Al(iBu)3 et de B(pfp)3 ne donne que des traces de polymère.

L'utilisation de dimethylmagnésium en tant qu'agent alkylant d'un complexe aminodiamide de titane dichloré est décrite dans JOURNAL OF ORGANOMETALLIC CHEMISTRY 1995, 501, 333-340.

Par ailleurs, il apparaît que lors des réactions de polymérisation des alpha-oléfines impliquant l'utilisation du complexe diméthyle bisamidure de titane, les résultats obtenus sont peu reproductibles en raison de la faible stabilité dudit complexe.

La présente invention se propose de pallier les inconvénients des systèmes catalytiques connus utilisés lors de la polymérisation des alpha-oléfines.

Un premier objectif de l'invention est de proposer une combinaison catalytique performante, apte à générer *in situ* les espèces actives lors de la polymérisation des alpha-oléfines, permettant ainsi de mieux contrôler la réaction de polymérisation et d'obtenir des polyalpha-oléfines de haut poids moléculaire dans des conditions optimisées en termes de durée, température et quantité de catalyseurs.

Un autre objectif de cette invention est de démontrer la possibilité d'alkyler in situ un complexe précurseur dichloré sans recours à la présence d'organoaluminique dans le milieu réactionnel, ce qui constitue en soi un aspect original et nouveau dans le domaine de la polymérisation des alpha-oléfines sur des catalyseurs à base de métaux du groupe 4.

A cet effet et selon un premier aspect, l'invention concerne une combinaison catalytique pour la polymérisation ou la copolymérisation des alpha-oléfines, comprenant les composants A, B et C suivants :
- le composant A qui est un complexe dichloré de bisamidure de titane de formule générale I: 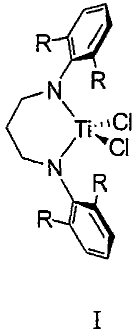 dans laquelle R représente un groupe méthyle (composant A2) ou un groupe isopropyle (composant A1);
- le composant B qui est le butyléthylmagnésium dont la réaction avec le composant A permet d'obtenir un composant alkylé AA de formule générale II : 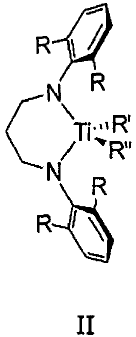
- et, comme activateur dudit composant alkylé AA, le composant C qui est le tris-pentafluorophénylborane (B(C₆F₅)₃). Les groupes R' et R" sont indépendamment l'un de l'autre un groupe butyle ou un groupe éthyle.

L'association de ces trois composants A, B et C constitue un système de catalyse performant pour la polymérisation des alpha-oléfines, notamment de l'hexène-1, qui permet de contourner l'utilisation directe du complexe actif diméthyle bisamidure de titane, caractérisé par une grande sensibilité à l'eau et à l'oxygène.

La combinaison catalytique selon l'invention présente la particularité de permettre la génération *in situ* du catalyseur actif lors de la polymérisation ou copolymérisation des alpha-oléfines, à partir des composants stables, disponibles commercialement ou d'accès très aisé et qui sont utilisés en quantités catalytiques, sans avoir recours à un large excès d'agent alkylant et/ou passivant.

Selon un deuxième aspect, l'invention a trait à un procédé de polymérisation ou de copolymérisation des alpha-oléfines, mettant en oeuvre ladite combinaison catalytique, caractérisé en ce qu'il comprend les étapes suivantes :
i. alkylation *in situ* du composant A, mis en suspension au préalable dans un solvant, à l'aide du composant B pour obtenir un composant alkylé AA de formule générale II, dans laquelle R représente un groupe méthyle (composant AA2) ou un groupe isopropyle (composant AA1);
ii. activation du composé alkylé AA par l'ajout du composant C dans le milieu de réaction, pour former *in situ* un catalyseur actif D;
iii. introduction dans le milieu de réaction comprenant le catalyseur actif D d'au moins un monomère alpha-oléfinique et éventuellement d'au moins un comonomère, dans des conditions (de température, durée, solvant) permettant la synthèse d'un polymère ou copolymère polyalpha-oléfinique.

L'invention va maintenant être décrite en détail.

Selon un premier aspect, l'invention se rapporte à une combinaison catalytique pour la polymérisation ou la copolymérisation des alpha-oléfines comprenant les composants A, B et C suivants :
- le composant A qui est un complexe dichloré de bisamidure de titane de formule générale I: 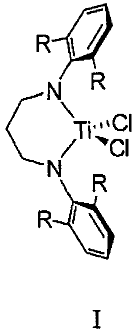 dans laquelle R représente un groupe méthyle (composant A2) ou un groupe isopropyle (composant A1);
- le composant B qui est le butyléthylmagnésium dont la réaction avec le composant A permet d'obtenir un composant alkylé AA de formule générale II : 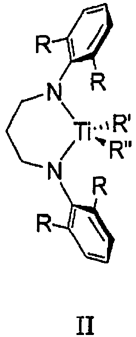
- et, comme activateur dudit composant alkylé AA, le composant C qui est le tris-pentafluorophénylborane (B(C₆F₅)₃). Les groupes R' et R" sont indépendamment l'un ou l'autre un groupe butyl ou un groupe éthyl.

Le demandeur a constaté que, quelque soient les essais réalisés avec le complexe bisamidure diméthylé de titane en polymérisation de l'hexène-1 en présence de tris-pentafluorophénylborane, des problèmes de reproductibilité se sont révélés, en raison de la faible stabilité du complexe diméthylé. Ceci l'a amené à envisager la formation *in situ* d'un complexe dialkyle préalablement à la réaction de polymérisation d'une alpha-oléfine.

L'association d'un bisamidure dichloré de titane, d'un dialkylmagnésium et du tris-pentafluorophénylborane en quantités stoechiométriques fournit un bisamidure dialkylé de titane qui est un catalyseur actif dans la polymérisation des alpha-oléfines, notamment de l'hexène-1.

Par rapport à d'autres complexes catalytiques connus, actifs dans la polymérisation des alpha-oléfines, tels que les complexes à base de zirconocènes en présence de composants organo-aluminium, le complexe précurseur à base de bisamidure de titane de l'invention se distingue par sa simplicité de synthèse à partir de produits peu coûteux.

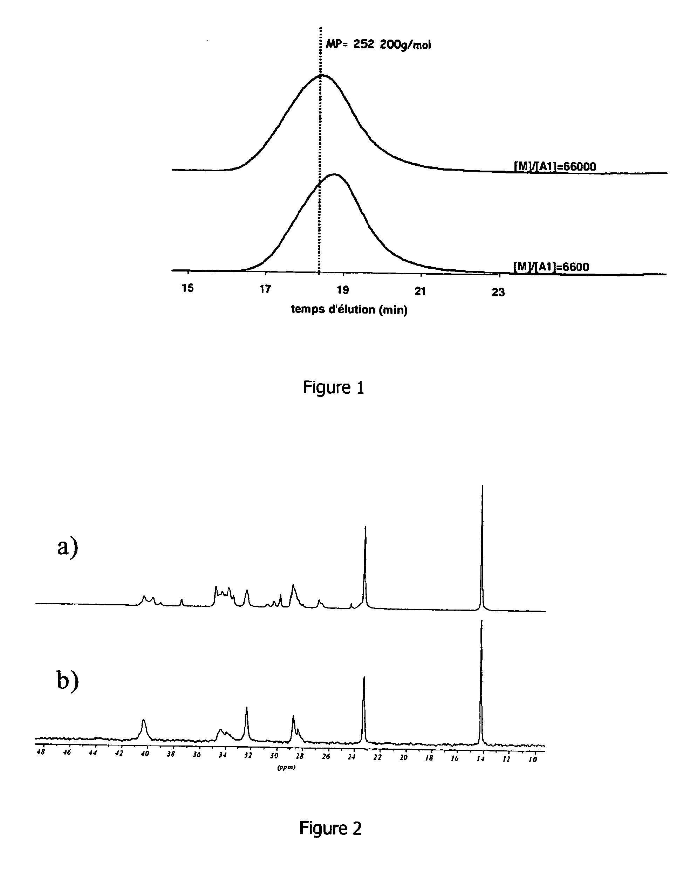

Le schéma de la figure 1 présente le mode de synthèse des complexes dichlorés bisamidure du titane A1 et A2 décrit dans la littérature.

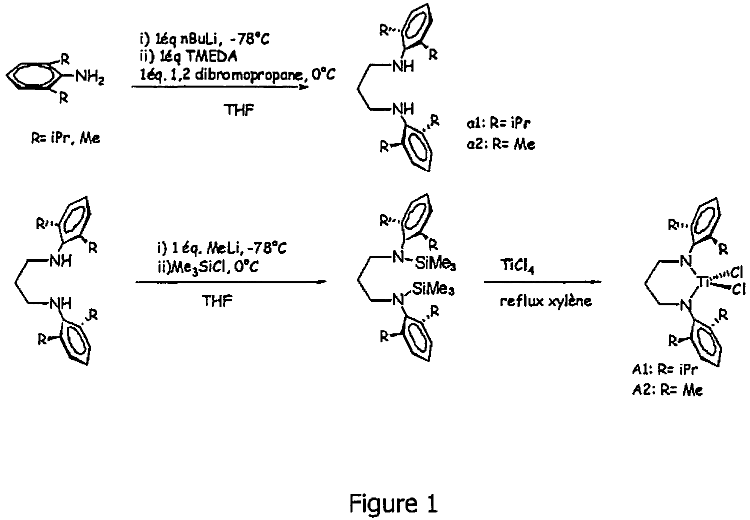

Pour accéder au complexe A2, le demandeur a mis au point une méthode de synthèse directe à partir d'un ligand diamine, comme montré dans la figure 2.

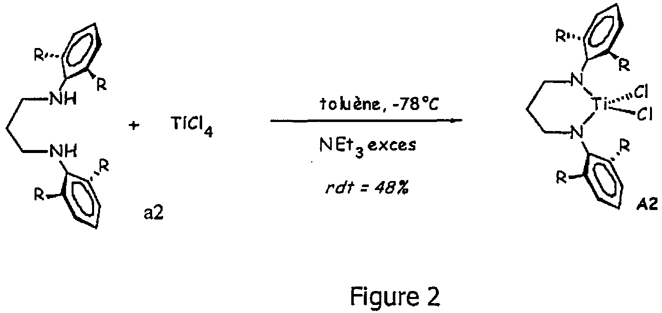

L'addition goutte à goutte du ligand diamine a2 à une solution de TiCl₄ dans le toluène à basse température permet la formation de l'espèce monocoordinée au métal. L'ajout d'un excès de triéthylamine (base de Lewis) permet la déprotonation de la fonction amine restante et la formation du complexe A2. Le rendement de cette réaction est de 48%.

Des cristaux du complexe dichloré bisamidure de titane ont été isolés par cette méthode et analysés par rayons X. Les fonctions amidures sont planes du fait d'une hybridation sp² de l'azote. Les cycles aromatiques sont perpendiculaires au plan constitué par les deux amidures et le métal. Les substituants de type méthyle assurent ainsi la protection du métal.

A la différence du complexe bisamidure diméthylé de titane, le complexe précurseur dichloré (composant A) est stable, son association avec les composants B et C permettant d'obtenir un système de catalyse pour la polymérisation des alpha-oléphines performant et conduisant à des résultats reproductibles.

Les composants B et C sont disponibles sur le marché.

Selon un deuxième aspect, l'invention a trait à un procédé de polymérisation ou de copolymérisation des alpha-oléfines, mettant en oeuvre la combinaison catalytique décrite, caractérisé en ce qu'il comprend les étapes suivantes :
i. alkylation *in situ* du composant A, mis en suspension au préalable dans un solvant, à l'aide du composant B pour obtenir un composant alkylé AA de formule générale II, dans laquelle R représente un groupe méthyle ou un groupe isopropyle;
ii. activation du composé alkylé AA par l'ajout du composant C dans le milieu de réaction, pour former *in situ* un catalyseur actif D;
iii. introduction dans le milieu de réaction comprenant le catalyseur actif D d'au moins un monomère alpha-oléfinique et éventuellement d'au moins un comonomère, dans des conditions (de température, durée, solvant) permettant la synthèse d'un polymère ou copolymère polyalpha-oléfinique.

Le monomère alpha-oléfinique est sélectionné parmi les alpha-oléfines comportant de 2 à 30 atomes de carbone. Dans un mode de réalisation, le monomère alpha-oléfinique est l'hexène-1.

Lorsque le monomère alpha-oléfinique est copolymérisé en présence d'un comonomère, ce dernier est sélectionné comme étant une molécule oléfinique différente de la même gamme C₂ à C₃₀.

Dans un mode de réalisation, le solvant dans lequel est mis en suspension le composant A est le monomère à (co)polymériser. Dans ce cas, ce dernier est également utilisé comme solvant lors de l'étape i d'alkylation dudit composant A et de l'étape ii d'activation du composant alkylé AA.

L'invention sera mieux comprise à la lecture des exemples de réalisation suivants, non limitatifs.

### Exemple 1. Polymérisation de l'hexène-1 à température ambiante

En boîte à gants sous atmosphère d'argon (teneur en H₂O et O₂ inférieure à 1 ppm), 6,8 mg de composant A1 (13,3 µmol) (R étant le groupe isopropyle) sont mis en suspension dans 1 mL de pentane sec et dégazé. Sous agitation magnétique, on ajoute ensuite 7,9 mg d'une solution 20% massique de butylethylmagnésium dans l'heptane (14,4 µmol). Après une heure de réaction à température ambiante, 0,1 mL de cette solution est transféré dans un réacteur, dans lequel on ajoute ensuite une solution de 0,68 mg de B(C₆F₅)₃ (1,33 µmol) dans 0,1 mL de pentane sec et dégazé. A l'aide d'une seringue, on introduit lentement 10 mL d'hexène-1 (0,080 mol, 60000 équivalents). Après une heure de réaction à température ambiante, 20 mL de méthanol sont ajoutés dans le réacteur. Un solide blanc visqueux précipite. Celui-ci est redissout dans le dichlorométhane puis reprécipité dans le méthanol. On obtient 1,118 g de poly(hexène-1), soit une productivité de 840 kg_{pol.}. mol _{cata}⁻¹.h⁻¹. Les analyses RMN ¹H et ¹³C sont caractéristiques d'un poly(hexene-1) régiorégulier et atactique. La CES indique un Mₙ de 7715 g.mol⁻¹ et un IP de 4,62.

### Exemple 2. Polymérisation de l'hexène-1

En boîte à gants sous atmosphère d'argon (teneur en H₂O et O₂ inférieure à 1 ppm), un réacteur en verre est chargé avec une solution de 5,3 mg de composant A2 (13,3 µmol) (R étant le groupe méthyle) dans 1 mL de toluène sec et dégazé. Sous agitation magnétique, on ajoute ensuite 9,2 mg d'une solution 20% massique de butyléthylmagnésium dans l'heptane (16,7 µmol) diluée dans 2 mL de toluène sec et dégazé. Après une minute de réaction à température ambiante, on ajoute successivement une solution de 6,8 mg de B(C₆F₅)₃ (13,3 µmol) dans 2 mL de toluène sec et dégazé, puis 10 mL d'hexène-1 (0,080 mol, 6000 équivalents). Le réacteur est fermé hermétiquement et placé sous agitation magnétique hors de la boîte à gants dans un bain chauffant à 70°C. Après une heure de réaction, 20 mL de méthanol sont ajoutés dans le réacteur. On recueille 1,075 g de polymère, soit une productivité de 81 kg_{pol.}. mol _{cata}⁻¹.h⁻¹. Les analyses RMN ¹H et ¹³C indiquent la présence de doubles liaisons.

### Exemple 3. Choix de l'agent alkylant

Plusieurs agents alkylants ont été testés pour l'akylation *in situ* du composant A1: le butyléthylmagnésium (BEM) et le di(n-hexyl)magnésium ((n-Hex)₂Mg), le triméthylaluminium (TMA), le triéthylaluminium (TEA) et le diéthylzinc (Et₂Zn). L'alkylation du composant A est effectuée dans un solvant d'alkylation sélectionné dans le groupe : pentane, toluène, bromobenzène, monomère alpha-oléfinique pur.

L'alkylation du complexe dichloré A1 est effectuée en solution dans 1 mL de pentane par l'addition de 1 équivalent d'agent alkylant B. La solution est agitée une heure à température ambiante. La solution prend rapidement une coloration jaune caractéristique des complexes titane alkyle excepté dans le cas du diéthylzinc. La coloration devient brune après 15 minutes dans le cas des deux magnésiens alors que la solution reste jaune avec les alkylaluminiums.

Après l'alkylation, un équivalent de composant C (B(C₆F₅)₃) est additionné en solution dans 1 mL de pentane. Une espèce jaune orangé insoluble se forme dans le cas des magnésiens. Dans le cas des dérivés aluminiques aucun précipité ne se forme, la solution se colore en jaune orangé dans ce cas.

L'activation du composant AA est effectuée dans un solvant d'activation sélectionné dans le groupe : pentane, toluène, bromobenzène, monomère alpha-oléfinique pur.

La polymérisation est effectuée par l'ajout du monomère dans la solution catalytique. Les résultats sont présentés dans le tableau 1.

Les résultats obtenus permettent de montrer que seul le composant A1 alkylé par le BEM est actif pour la polymérisation de l'hexène-1 en présence du composant C (B(C₆F₅)₃). La combinaison catalytique selon l'invention présente une activité entre 5 et 10 fois supérieure à celles obtenues avec le complexe diméthyle bisamidure de titane activé par le borane (conformément à J. Am. Chem. Soc. 1996, 118, 10008-10009). La polymérisation est très exothermique (ébullition du réactif en 30 secondes) et moins de 5 minutes sont nécessaires pour que le système prenne en masse. L'hydrolyse est effectuée après 30 minutes.

Les autres agents alkylants ne permettent pas la polymérisation de l'hexène-1 dans les conditions utilisées. Le di(n-hexyl)magnésien présente cependant une très faible activité qui n'est pas comparable à celle obtenue avec le BEM.

Les masses molaires obtenues dans le cas du système composant A1/BEM/B(C₆F₅)₃ sont six fois supérieures à celles du système : composant alkylé AA1/ B(C₆F₅)₃/excès de MAO. L'analyse en RMN du proton des polymères ne permet pas de détecter la présence de protons oléfiniques. Le polymère obtenu est atactique.

**Tableau 1**

| N° | Catalyseur | M (g) | TOF (/h) | Activité (g/mmol/h) | Mn (g/mol) | IP |
|---|---|---|---|---|---|---|
| 1* | Composant A1 alkylé (AA1)(témoin) | 0,09-0,17 | 270-510 | 13-26 | 12 800 - 17 664 | 1,2 |
| 2 | Composant A1/BEM | 0,94 | 1406 | 141 | 67 420 | 3,3 |
| 3* | Composant A1 / (n-Hex)₂Mg | 0,020 | 1,5 | - | - | - |
| 4* | Composant A1 /Et₂Zn | - | - | - | - | - |
| 5* | Composant A1 /TMA | - | - | - | - | - |
| 6* | Composant A1 /TEA | - | - | - | - | - |

| | | | | | | |
|---|---|---|---|---|---|---|
| [AA1]=[A1]= 13,3µmol, 1éq. BEM, 1éq B(C₆F₅)₃, 1 mL pentane, 5 mL hexène-1, T=27°C, t=30min. * exemples comparatifs | | | | | | |

### Exemple 4. Influence du rapport monomère/catalyseur [M]/[A]

Afin de mieux contrôler la réaction catalytique et les résultats obtenus, la quantité de catalyseur a été réduite sensiblement. Lors des premiers essais un rapport : concentration molaire du monomère M/concentration molaire du précurseur du catalyseur (composant A1), d'environ 6600 a été utilisé. La prise en masse rapide et le fort échauffement du système ne permettent pas d'avoir une idée précise de l'activité de ce système. Le rapport monomère/composant A a donc été augmenté afin de ralentir la réaction et d'être dans des conditions plus favorables à des mesures représentatives de l'activité.

Le tableau 2 présente les résultats obtenus pour un rapport monomère/composant A de 66000. Les activités obtenues sont trois fois supérieures à celles obtenues pour un rapport 6600. Il y a toujours prise en masse du milieu réactionnel mais la diminution de la quantité du précurseur du catalyseur (composant A) engendre une réaction moins exothermique. Les masses molaires augmentent légèrement avec l'augmentation du rapport monomère /composant A, comme montré dans la figure 1 annexée qui illustre les profils CES des poly(hexène-1) obtenus pour ces deux rapports monomère/composant A1. Ce résultat est vraisemblablement dû à la prise en masse plus lente de la réaction. Dans le cas d'un rapport monomère/composant A1 de 6600 la réaction est violente avec une prise en masse immédiate. La diminution de la quantité de composant A1 permet une agitation jusqu'à la fin de la réaction.

De préférence, la rapport molaire monomère - composant A est supérieur à 50 000.

**Tableau 2**

| N° | [M]/[A1] | m(g) | Activité g/mmol/h | Mn (g/mol) | IP |
|---|---|---|---|---|---|
| 1 | 6 600¹ | 1,98 | 149 | 113 360 | 2,5 |
| 2 | 66 000² | 0,66 | 501 | 151 800 | 2,9 |
| T=27°C, t=1h, ¹vₚₑₙₜₐₙₑ= 2mL, ² vₚₑₙₜₐₙₑ=0,2mL. | | | | | |

### Exemple 5. Influence du rapport composant B /composant A

Le tableau 3 présente les résultats obtenus pour 1, 2 et 4 équivalents de magnésien introduits.

**Tableau 3**

| N° | Equiv. de composant B | m (g) | Activité (g/mmol/h) | Mn (g/mol) | IP |
|---|---|---|---|---|---|
| 1 | 1 | 0,67 | 501 | 151 800 | 2,9 |
| 2 | 2 | 1,29 | 766 | 153 750 | 2,9 |
| 3 | 4 | 0,08 | 49 | 166 600 | 3,0 |

| | | | | | |
|---|---|---|---|---|---|
| T=27°C, t=1h, [M]/(A1]=66000 ;vₚₑₙₜₐₙₑ=0,2mL. | | | | | |

Les masses molaires obtenues sont comparables, quelle que soit la quantité de butyléthylmagnésium utilisée. L'espèce active formée semble donc être la même dans les trois cas. L'activité catalytique est optimale dans le cas de l'ajout de deux équivalents de magnésien. Notons par ailleurs que des réactions avec le rapport Mg/Ti = 1 ont parfois donné lieu à des activités nettement supérieures à l'essai n° 1 du tableau 3, à savoir : m=1,7g ; activité : 1280 g/mmol/h, Mn = 142060 g/mol, IP = 3,1. L'addition d'un trop grand excès d'agent alkylant joue un rôle inhibiteur sur la réaction catalytique, probablement en raison de la formation d'une espèce non réactive.

En général, le rapport molaire agent alkylant - composant A est compris entre 0,1 et 10, étant préférentiellement de 1 à 2.

### Exemple 6. Influence du temps d'alkylation et effet du solvant

Deux temps d'alkylation : une heure et cinq minutes, et trois solvants : pentane, bromobenzène et toluène, ont été testés. Le rapport magnésien/composant A est gardé à la valeur de 1.

Les résultats, présentés dans le tableau 4, montrent qu'aucune influence de la durée de réaction d'alkylation n'est observée dans le cas du bromobenzène, alors que dans le cas du pentane il existe des variations importantes. La totalité de l'espèce active n'est probablement pas formée totalement en cinq minutes dans le pentane et sa formation ultérieure en cours de réaction peut initier des nouvelles chaînes de polymère entraînant ainsi une augmentation de l'indice de polymolécularité (IP). Dans le cas du bromobenzène, la polarité du solvant permet de favoriser la réaction d'alkylation et la formation et la solubilisation d'espèces cationiques.

Le bromobenzène présente les meilleurs résultats. D'une part, il solubilise les différents intermédiaires lors de la réaction d'activation et d'autre part les activités et les masses molaires obtenues sont supérieures à celles obtenues dans le cas du pentane. Le toluène présente des résultats comparables au bromobenzène.

**Tableau 4**

| N° | solvant | [M]/[A1] | M (g) | Temps activation | Activité g/mmol/h | Mn (g/mol) | IP |
|---|---|---|---|---|---|---|---|
| 1 | pentane | 6600 | 1,9 | 1h | 149 | 113 360 | 2,5 |
| 2 | | 6600 | 3,3 | 5 min | 251 | 18 030 | 8,7 |
| 3 | bromobenzène | 66 000 | 2,1 | 1h | 1578 | 232 400 | 2,7 |
| 4 | | 66 000 | 2,2 | 5 min | 1646 | 239 850 | 2,7 |
| 5 | toluène | 66 000 | 2,0 | 5 min | 1475 | 234 560 | 2,7 |
| | T=27°C, t=1h, vₛₒₗᵥₐₙₜ=0,2 mL | | | | | | |

### Exemple 7. Optimisation des paramètres du procédé de polymérisation

Les activités catalytiques présentées pour un rapport monomère/composant A de 66000 dans le bromobenzène sont minorées. La prise en masse rapide du milieu ne permet pas en effet d'avoir l'activité maximum du système catalytique. La quantité de composant A est dans ce cas de l'ordre de 1 µmol. Des polymérisations avec des rapports monomère/catalyseur plus élevés ont été réalisées. Les résultats catalytiques sont présentés dans le tableau 5.

Chaque essai est réalisé avec la même quantité de solvant et de monomère (respectivement 0,2 mL de solvant et 10 mL de monomère). La quantité de composant A est obtenue par dilution d'une solution mère dans le bromobenzène, ajustée de manière à utiliser 0,2 mL de solution catalytique.

Jusqu'à un rapport monomère /composant A de 132 000, le système prend en masse progressivement. Au delà de ce rapport plus aucune activité n'a été observée. La quantité de composant A1 utilisée est de l'ordre de 0,1 µmol. A cette valeur, le système devient très sensible aux impuretés.

Afin de travailler à des rapports monomère/composant A élevés, le TMA et le TEA (10 équivalents) ont été ajoutés séparément au monomère comme agent passivant quelques minutes avant l'introduction du composant A. Aucune activité n'a été observée pour un rapport monomère/composant A de 66000.

L'activité maximum observée pour ce système activé *in situ* par le BEM et le B(C₆F₅)₃ est de 5 kg/mmol/h avec des masses molaires de 239 000 g/mol.

**Tableau 5**

| | [M]/[A1] | µmol catalyseur | M(g) | Activité (g/mmol/h) | Mn (g/mol) | IP |
|---|---|---|---|---|---|---|
| 1 | 66 000 | 1,3 | 2,2 | 1646 | 239 850 | 2,7 |
| 2 | 132 000 | 0,65 | 3,4 | 5118 | 239 650 | 2,5 |
| 3 | 264 000 | 0,33 | - | - | - | - |
| | T=27°C, 1éq. BEM, 1 éq. borane, 10mL hexène-1, t=1h, v_{bromobenzène}=0,2mL | | | | | |

### Exemple 8. Essai dans le monomère pur

En boîte à gants sous atmosphère d'argon (teneur en H₂O et O₂ inférieure à 1 ppm), 11,2 mg de composant A1 (21,9 µmol) (R étant le groupe isopropyle) sont mis en suspension dans 8 mL d'hexène-1 sec et dégazé. Sous agitation magnétique, on ajoute ensuite 16,3 mg d'une solution 20% massique de butylethylmagnésium (29,3 µmol) dans 1 mL d'hexène-1. Après 2 minutes de réaction à température ambiante, on ajoute ensuite une solution de 11,7 mg de B(C₆F₅)₃ (22,9 µmol) dans 1 mL d'hexène-1. La quantité d'hexène-1 est de 0,080 mol (3600 équivalents). Après 25 minutes de réaction à température ambiante, 20 mL de méthanol sont ajoutés dans le réacteur. Un solide blanc visqueux précipite. Celui-ci est redissout dans le dichlorométhane puis reprécipité dans le méthanol. On obtient 4,04 g de poly(hexène-1), soit une productivité de 440 kg_{pol.}. mol_{cata}¹.h⁻¹. Les analyses RMN ¹H et ¹³C sont caractéristiques d'un poly(hexene-1) régiorégulier et atactique.

### Exemple 9. Essai de copolymérisation hexène-1- éthylène

Dans un réacteur en verre, à une suspension de 10,2 mg de A1 (19,9 µmol) dans 2,5 mL de pentane, on ajoute une solution de 11,4 mg de BEM (20,6 µmol) dans 4 mL de pentane. Le milieu réactionnel est placé sous 1 bar d'éthylène par des purges successives de vide léger et d'éthylène. On refroidit le réacteur à 0°C, et on ajoute successivement 10,6 mg de BARF (20,7 µmol) dans 5 mL de pentane, puis 1 mL d'hexène-1 (8 mmol, 400 équivalents). Après 1 heure, on injecte 25 mL de méthanol, et on évapore à sec pour obtenir un solide blanc visqueux. On extrait au THF et on sépare par filtration la fraction insoluble (0,24 g de solide blanc). La fraction insoluble présente un IP de 1,95 et une masse molaire de 143 000 g/mol ; le taux d'incorporation de l'éthylène est de 28% molaire (sur la base des signaux correspondant aux motifs hexényles et éthylényles par RMN du proton).

La fraction soluble dans le THF (0,45 g) est analysée par RMN ¹³C dans le CDCl₃, qui confirme la formation de copolymère hexène-éthylène (comme montré dans la figure 2 annexée, a) étant le spectre du copolymère et b) le spectre d'un polyhexène typique obtenu avec la combinaison catalytique de l'invention). La fraction soluble présente un IP de 2,15 et une masse molaire de 75 600 g/mol. Le taux d'incorporation est estimé à 17% molaire (sur la base des signaux correspondant aux motifs hexényles et éthylényles par RMN du proton). On peut ainsi obtenir des copolymères de caractéristiques et propriétés variables par simple précipitation du mélange de copolymères obtenus.

La combinaison catalytique A/B/C selon l'invention présente de nombreux avantages. Le complexe dichloré à base de diamidure de titane se distingue par sa simplicité de synthèse à partir de produits peu coûteux, par rapport aux zirconocènes. Ce système ne nécessite pas l'utilisation de méthylaluminoxane en tant que cocatalyseur, produit coûteux et qui, par hydrolyse ultérieure, provoque la formation d'hydroxyde d'aluminium, produit secondaire indésirable. Ce système précurseur est particulièrement intéressant car il permet d'améliorer les activités et d'obtenir des polymères ou copolymères de masses moléculaires élevées.

## Revendications

1. Combinaison catalytique pour la polymérisation ou la copolymérisation des alpha-oléfines, comprenant les composants A, B et C suivants :
- le composant A qui est un complexe dichloré de bisamidure de titane de formule générale I: 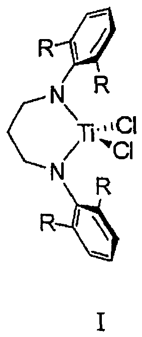 dans laquelle R représente un groupe méthyle (composant A2) ou un groupe isopropyle (composant A1);
- le composant B qui est le butyléthylmagnésium dont la réaction avec le composant A permet d'obtenir un composant alkylé AA de formule générale II : 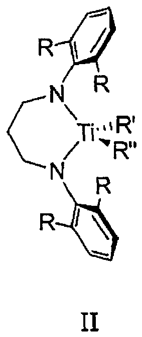 dans laquelle les groupes R' et R" sont indépendamment l'un de l'autre un groupe butyl ou un groupe éthyl.
- et, comme activateur dudit composant alkylé AA, le composant C qui est le tris-pentafluorophénylborane (B(C₆F₅)₃).

2. Procédé de polymérisation ou de copolymérisation des alpha-oléfines, mettant en oeuvre la combinaison catalytique selon la revendication 1, **caractérisé en ce qu'**il comprend les étapes suivantes :
i. alkylation *in situ* du composant A, mis en suspension au préalable dans un solvant, à l'aide du composant B pour obtenir un composant alkylé AA de formule générale II, dans laquelle R représente un groupe méthyle (composant AA2) ou un groupe isopropyfe (composant AA1);
ii. activation du composé alkylé AA par l'ajout du composant C dans le milieu de réaction, pour former *in situ* un catalyseur actif D;
iii. introduction dans le milieu de réaction comprenant le catalyseur actif D d'au moins un monomère alpha-oléfinique et éventuellement d'au moins un comonomère, dans des conditions de température, durée, solvant permettant la synthèse d'un polymère ou copolymère polyaplha-oléfinique.

3. Procédé selon la revendication 2 dans lequel le monomère alpha-oléfinique est sélectionné parmi les alpha-oléfines de la gamme C₂ à C₃₀·

4. Procédé selon la revendication 3 dans lequel le monomère alpha-oléfinique est l'hexène-1.

5. Procédé selon l'une des revendications 2 à 4 dans lequel le comonomère est sélectionné dans la gamme des oléfines C₂ à C₃₀.

6. Procédé selon l'une quelconque des revendications 2 à 5 **caractérisé en ce que** le solvant dans lequel le composant A est mis en suspension est le monomère alpha-oléfinique de la (co)polymérisation.

7. Procédé selon l'une quelconque des revendications 2 à 6 dans lequel le rapport molaire monomère - composant A est supérieur à 50 000.

8. Procédé selon l'une quelconque des revendications 2 à 7 dans lequel le rapport molaire agent alkylant - composant A est compris entre 0,1 et 10, étant préférentiellement de 1 à 2.

9. Procédé selon l'une quelconque des revendications 2 à 8 dans lequel l'étape d'alkylation étant effectuée dans un solvant d'alkylation et l'étape d'activation étant effectuée dans un solvant d'activation, ledit solvant d'alkylation et ledit solvant d'activation sont sélectionnés dans le groupe : pentane, toluène, bromobenzène, monomère alpha-oléfinique pur.

10. Procédé selon l'une quelconque des revendications 2 à 9 comprenant préalablement à l'étape i une étape de préparation du composant A selon la réaction suivante :

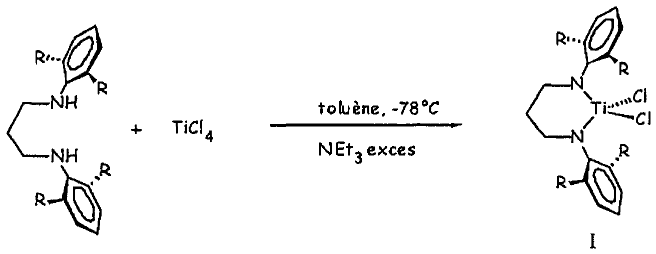

## Patentansprüche

1. Katalytische Zusammensetzung zur Polymerisation oder Copolymerisation von alpha-Olefinen, umfassend die folgenden Komponenten A, B und C:
- die Komponente A, bei der es sich um einen dichlorierten Titandiamidkomplex mit der allgemeinen Formel I handelt: 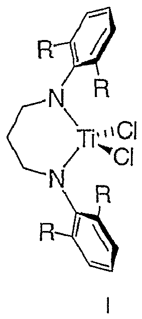
- worin R für eine Methylgruppe (Komponente A2) oder eine Isopropylgruppe (Komponente A1) steht;
- die Komponente B, bei der es sich um ein Dialkylmagnesium handelt, dessen Umsetzung mit der Komponente A den Erhalt einer alkylierten Komponente AA mit der allgemeinen Formel II ermöglicht: 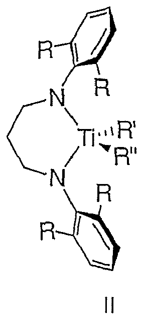 worin die Gruppen R' und R" unabhängig voneinander eine Butylgruppe oder eine Ethylgruppe sind.
- und als Aktivator der alkylierten Komponente AA, die Komponente C, bei der es sich um Tris-pentafluorphenylboran (B(C₆Fs)₃) handelt.

2. Verfahren zur Polymerisation oder Copolymerisation von alpha-Olefinen, bei dem die katalytische Zusammensetzung nach Anspruch 1 eingesetzt wird, **dadurch gekennzeichnet, dass** es die folgenden Schritte umfasst:
i. Alkylieren der Komponente A *in situ,* die zuvor in einem Lösemittel suspendiert wurde, mithilfe der Komponente B, um eine alkylierte Komponente AA mit der allgemeinen Formel II zu erhalten, worin R für eine Methylgruppe (Komponente AA2) oder eine Isopropylgruppe (Komponente AA1) steht;
ii. Aktivieren der alkylierten Verbindung AA durch Zugeben der Komponente C zu dem Reaktionsmedium, um *in situ* einen aktiven Katalysator D zu bilden;
iii. Einführen in das Reaktionsmedium, umfassend den aktiven Katalysator D, mindestens eines alpha-olefinischen Monomers und gegebenenfalls mindestens eines Comonomers unter Temperatur-, Dauer-, Lösemittelbedingungen, die die Synthese eines polyalpha-olefinischen Polymers oder Copolymers ermöglichen.

3. Verfahren nach Anspruch 2, wobei das alpha-olefinische Monomer aus den C₂-bis C₃₀-alpha-Olefinen ausgewählt ist.

4. Verfahren nach Anspruch 3, wobei das alpha-olefinische Monomer Hexen-1 ist.

5. Verfahren nach einem der Ansprüche 2 bis 4, wobei das Comonomer aus den C₂- bis C₃₀-Olefinen ausgewählt ist

6. Verfahren nach irgendeinem der Ansprüche 2 bis 5, **dadurch gekennzeichnet, dass** das Lösemittel in dem die Komponente A suspendiert wird, das alpha-olefinische Monomer der (Co)Polymerisation ist.

7. Verfahren nach irgendeinem der Ansprüche 2 bis 6, wobei das Molverhältnis von Monomer zu Komponente A größer als 50.000 ist.

8. Verfahren nach irgendeinem der Ansprüche 2 bis 7, wobei das Molverhältnis von Alkylierungsmittel zu Komponente A im Bereich zwischen 0,1 und 10, vorzugsweise von 1 bis 2, liegt.

9. Verfahren nach irgendeinem der Ansprüche 2 bis 8, wobei der Alkylierungsschritt in einem Alkylierungslösemittel durchgeführt wird und der Aktivierungsschritt in einem Aktivierungslösemittel durchgeführt wird, wobei das Alkylierungslösemittel und das Aktivierungslösemittel ausgewählt sind aus der Gruppe: Pentan, Toluen, Brombenzen, reines alpha-olefinisches Monomer.

10. Verfahren nach irgendeinem der Ansprüche 2 bis 9, umfassend vor Schritt i einen Schritt zur Herstellung von Komponente A gemäß der folgenden Reaktion:

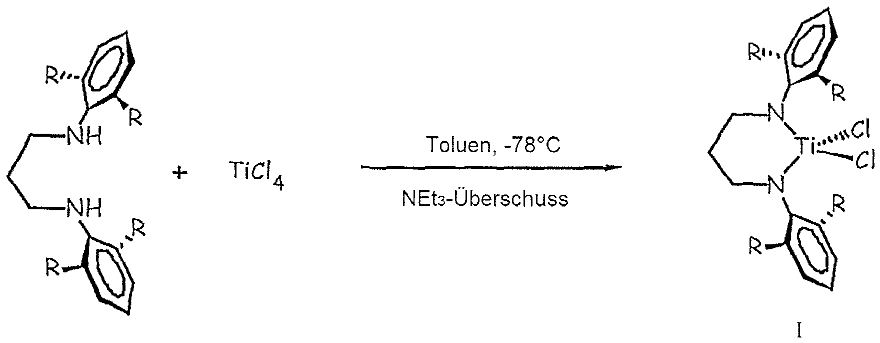

## Claims

1. A catalytic combination for the polymerization or copolymerization of alpha-olefins, comprising the following components A, B and C:
- component A which is a dichlorinated complex of titanium diamide having the general formula I: 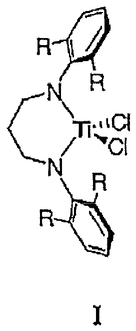 wherein R reprsents a methyl group (component A2) or an isopropyl group (component A1);
- component B which is butylethylmagnesium whose reaction with component A allows an alkylated component AA to be obtained of general formula II: 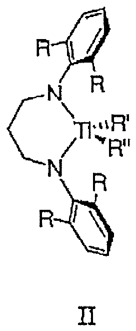 wherein the groups R' and R" are independently of each other, a butyl group or an ethyl group,
- and, as an activator of said alkylated component AA, component C which is tris-pentafluorophenylborane [B(C₆F₅)₃].

2. A method for polymerizing or copolymerizing alpha-olefins, applying the catalytic combination according to claim 1, **characterized in that** it comprises the following steps:
i) *in situ* alkylation of component A, suspended beforehand in a solvent, by means of component B to obtain an alkylated component AA of general formula II, wherein R represents a methyl group (component AA2) or an isopropyl group (component AA1);
ii) activation of the alkylated compound AA through the addition of component C to the reaction medium, to form an active catalyst D *in situ*;
iii) introducing into the reaction medium comprising the active catalyst D, at least one alpha-olefin monomer and optionally at least one comonomer under conditions of temperature, time, solvent enabling the synthesis of a polyalpha-olefin polymer or copolymer.

3. The method according to claim 2, wherein the alpha-olefin monomer is selected from among alpha-olefins in the C₂-C₃₀ range.

4. The method according to claim 3, wherein the alpha-olefin monomer is 1-hexene.

5. The method according to one of claims 2 to 4, wherein the comonomer is selected from among olefins in the C₂-C₃₀ range.

6. The method according to any of claims 2 to 5, **characterized in that** the solvent in which component A is suspended is the (co)-polymerization alpha-olefin monomer.

7. The method according to any of claims 2 to 6, wherein the monomer/component A molar ratio is greater than 50,000.

8. The method according to any of claims 2 to 7, wherein the alkylating agent/component A molar ratio is comprised between 0.1 and 10, preferably from 1 to 2.

9. The method according to any of claims 2 to 8, wherein the alkylation step being carried out in an alkylation solvent, and the activation step being carried out in an activation solvent, said alkylation solvent and said activation solvent are selected from the group: pentane, toluene, bromobenzene, pure alpha-olefin monomer.

10. The method according to any of claims 2 to 9, which, prior to step i, comprises a step for preparing component A according to the following reaction:
